# EUROPEAN PATENT APPLICATION

(11) **EP 3 023 918 A1**
(43) Date of publication of application: **25.05.2016**
(21) Application number: 14193916.5
(22) Date of filing: 19.11.2014
(51) Int. Cl.: G06Q 10/04, G06Q 10/08

(54) **Freight container storage system**

(71) Applicant: Airbus Operations GmbH, 21129 Hamburg (DE); Airbus Defence and Space GmbH, 85521 Ottobrunn (DE)
(72) Inventor: Gonnsen, Johannes, 21129 Hamburg (DE); Schubotz, René, 66121 Saarbrücken (DE)
(74) Representative: Kopf Westenberger Wachenhausen Patentanwälte PartG mbB

(57) **Abstract**

According to an exemplary embodiment of the present invention, a configuration system for calculating a feature of each element of a plurality of elements is provided. The system comprises a database in which a set of rules for each element of the plurality of elements is stored, and a processing unit which is designed to automatically vary a first feature of a first element or for automatically replacing the first element by another element, and for calculating the features of the elements in accordance with the set of rules. By allowing to automatically vary a feature of an element or by allowing automatic replacement of an element by another element, the configuration of the elements may be optimized.

## Description

### Field of the invention

The invention relates to a configuration system for calculating a feature of each element of a plurality of elements. More particularly, the invention relates to a fright container storage system, for example in a harbour, on a vehicle, such as a ship, a truck or a train, or in a warehouse, to a method of calculating storage positions of a plurality of fright containers in a storage space, to a program element and to a computer-readable medium.

### Background

Unloading, storing and loading of fright containers or other kinds of storage units may be a complex task. Freight containers can be delivered to a storage space, such as a harbour or a warehouse, by a vehicle, unloaded from the vehicle and moved to a respective storage position in the storage space. After a certain time, the containers may be loaded to a further vehicle, for delivery.

### Summary of the invention

It is an object of the present invention to provide for an efficient configuration system, which may be used in connection with a fright container storage system.

This object is achieved by the subject-matter of the independent claims. Developments of the invention are stated in the dependent claims and the following description.

According to a first aspect of the present invention, a configuration system for calculating a feature of each element of a plurality of elements is provided, the system comprising a data base comprising a set of rules for each element of the plurality of elements and a processing unit for automatically varying a first feature of a first element of the plurality of elements and/or for automatically replacing the first element by another element of the plurality of elements, and for calculating the features of the elements in accordance with the set of rules.

According to an exemplary embodiment of the present invention, the configuration system is adapted as a fright container storage system which is configured for calculating storage positions of a plurality of fright containers in a storage space. The set of rules stored in the database relates to each one of the plurality of fright containers, or at least to a subgroup of fright containers of the plurality of fright containers.

Further, the processing unit is configured to automatically vary a storage position at which a first fright container of the plurality of fright containers is to be stored in the storage space and/or to automatically replace the storage position of another fright container of the plurality of fright containers by the storage position of the first fright container, and for determining the storage positions of the plurality of fright containers in accordance with the set of rules.

The variation or replacement of storage positions and containers may be performed on a virtual basis, i.e. during a simulation, and not by physically moving the containers.

In other words, the fright container storage system is capable of calculating storage positions for each of the fright containers, and producing a result in which the storage position of the first fright container differs from the storage position of the first fright container which has been defined in the beginning of this process. Alternatively, the system may even replace, in a virtual sense, the first fright container by another fright container, for example because it may be more advantageous to place another fright container on the position of the first fright container. After that, the storage positions of all fright containers are calculated, always observing the set of rules.

By (virtually) replacing the first fright container by another fright container or by varying the intended position of the first fright container in accordance with the set of rules, the system is capable of calculating optimized storage positions for all fright containers. A tool operator is not necessary for this calculation.

According to an exemplary embodiment of the present invention, the fright container storage system further comprises an input module for inputting customer-specific configuration data, the configuration data comprising identification data of the first fright container of the plurality of fright containers and the storage position at which the first fright container is to be stored in the storage space, i.e. the intended storage position.

Thus, a user may input into the system at which exact location he wants the particular storage container to be stored. However, the system is capable of and programmed to slightly change the storage position or even replacing it by another storage position, in order to reach a more favourable result.

According to another exemplary embodiment of the present invention, the set of rules is based on description logics for each fright container. Each fright container may be linked to one particular rule or even to a sub-set of the set of rules, which define the interrelation of the fright container to other fright containers and also to possible storage positions.

According to another exemplary embodiment of the present invention, the processing unit is further configured to perform a final check of the calculated storage positions and/or to perform a geometrical optimization of the storage positions.

During that final check, a plausibility test may be performed in order to determine, whether the calculated storage positions can be used for spacing the containers in the storage space. If it is determined during the final check that one or several storage positions are unacceptable or undesirable, these storage positions may be varied by the system once again, always observing the set of rules, followed by a further final check.

According to another exemplary embodiment of the present invention, the processing unit is further configured for optimizing the calculated positions of the fright containers. In case the storage space is on a cargo ship, all storage positions may be shifted slightly forward or backwards, or to the side, for achieving a perfect ship trim.

According to another exemplary embodiment of the present invention, the set of rules comprises a sub-set of deterministic rules which do not allow for varying the storage position at which a fright container is to be stored in the storage space and automatically replacing the fright container by another fright container of the plurality of fright containers. Furthermore, the set of rules comprises a sub-set of non-deterministic rules which do allow varying the storage position at which a fright container is to be stored in the storage space and automatically replacing the fright container by another fright container of the plurality of fright containers.

Only the non-deterministic rules allow a variation of a storage position or a (virtual) replacement of a storage container by another storage container by the processing unit. The deterministic rules do not allow for such a variation or replacement. Both groups of rules have to be observed at all times.

The system may be adapted to allow a customer or user to select both deterministic and non-deterministic rules which are to be observed during calculation of the storage positions of the plurality of fright containers. The system may also be capable of allowing a user to change a non-deterministic rule and to a deterministic rule. There may also be deterministic rules which the customer is allowed to disregard, in which case the system does not observe them. However, there are also deterministic rules which have to be observed at all times and cannot be disregarded, even if the customer would like to do so.

According to another exemplary embodiment of the present invention, the sub-set of deterministic rules is related to a first group of containers, wherein the sub-set of non-deterministic rules is related to a second group of containers which is different from the first group.

According to another exemplary embodiment of the present invention, a first rule of the set of rules is that the storage position of a fright container which contains a good qualified as a dangerous good is located in a rear area of the vessel, if the storage space is the cargo hold of a vessel. According to another exemplary embodiment of the present invention, a second rule of the set of rules is that the storage position of a fright container which contains a good qualified as a dangerous good is located in a region qualified for storing such a container. For example, if the storage space is on land, the region qualified for storing the container containing a dangerous good may be a region which can quickly be approached by a transport vehicle in order to be able to remove the dangerous good as fast as possible. If the storage space is on a cargo ship, the region qualified for storing such a container may be a certain space in the cargo space where it is safe to store such a container.

According to another exemplary embodiment of the present invention, the processing unit is further configured to perform a pre-calculation of the storage positions of the plurality of fright containers in the storage space, followed by a check whether the pre-calculated positions are acceptable, before performing a final calculation of the positions in accordance with the set of rules. The pre-calculation may be used to determine whether the final result (i.e. the positions of all containers) is likely to be acceptable and in particular whether it is likely that all rules can be observed.

If this pre-calculation comes to the result that it is possible to observe at least all deterministic rules and that it is also likely that the final result is acceptable, storage positions may be varied or containers may be (virtually) replaced by other containers, in order to optimize the final result.

According to another exemplary embodiment of the present invention, the processing unit is further configured to prioritize the rules to be observed, wherein a rule which is of low priority is disregarded, if observing one or more of the low priority rules which result in storage positions which contravene a higher priority rule.

According to another exemplary embodiment of the present invention, the system further comprises a container transport device for moving each container to its respective storage position, after the storage positions have been determined.

According to another aspect of the present invention, a method for calculating a feature of each element of a plurality of elements is provided, the method comprising automatically varying a first feature of a first element of the plurality of elements and/or for automatically replacing the first element by another element of the plurality of elements, and calculating the features of the elements in accordance with the set of rules.

According to exemplary embodiment of the present invention, a method of calculating storage positions of a plurality of fright containers in a storage space is provided, in which a storage position at which a first fright container of the plurality of fright containers is to be stored in the storage space is automatically varied and/or in which the first fright container is automatically replaced by another fright container of the plurality of fright containers. This variation or replacement of storage positions and containers is performed on a virtual basis, i.e. during a simulation and not by physically moving the containers. The method then determines the storage positions of each of the plurality of fright containers in accordance with a set of rules for each one of the plurality of fright containers. After that, the calculated storage positions may be used to control a container transport device, such as a crane, container terminal, portal crane or container carrier in order to load/unload and move the containers to their respective storage positions.

According to another aspect of the invention, a program element is provided, which, when being executed by a processor of a fright container storage system, instructs the processor to carry out the above and below described method steps.

According to another aspect of the invention, a computer-readable medium is provided, which comprises the above program element.

A computer-readable medium may be a floppy disk, a hard disk, a CD, a DVD, a USB (Universal Serial Bus) storage device, RAM (Random Access Memory), a ROM (Read Only Memory) and an EPROM (Erasable Programmable Read Only Memory). A computer-readable medium may also be a data communication network, for example the internet, which allows downloading of a program code.

These and other aspects of the present invention will become apparent from and elucidated with reference to the embodiments described hereinafter.

Exemplary embodiments of the present invention will now be described in the following, with reference to the following drawings.

### Brief description of the drawings

Fig. 1 shows a fright container storage system according to an exemplary embodiment of the present invention.
Fig. 2 shows a flow-chart of a method according to an exemplary embodiment of the present invention.
Fig. 3 shows a set of rules linked to a first element and another set of rules linked to a second element.
Fig. 4 shows the variation or replacement of a rule.

### Detailed description of embodiments

The illustration in the drawings is schematically. In different drawings, similar or identical elements are provided with the same reference numerals.

The following detailed description is merely exemplary in nature and is not intended to limit application and uses. Furthermore, there is no intention to be bound by any theory presented in the preceding background or summary or the following detailed description.

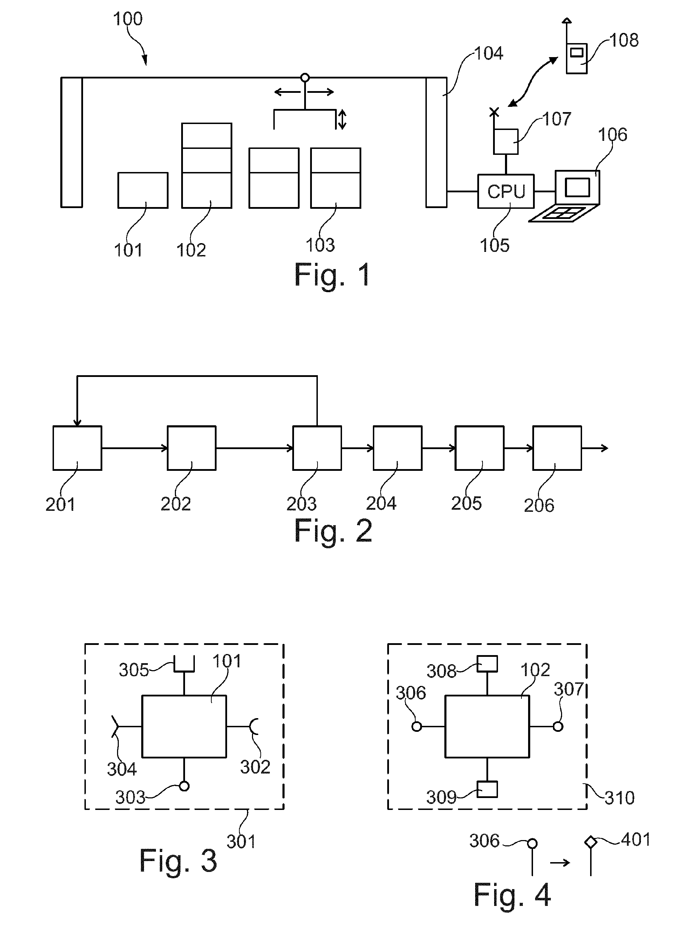

Fig. 1 shows a fright container storage system 100, which, inter alia, comprises a container transport device 104 capable of lifting containers 101, 102, 103 and moving them from a vehicle to a storage position, and vice versa. The container transport device 104 is connected to a control unit 105 which, in turn, is connected to a user input unit 106, which a user may use to input desired container positions or other information/requirements/constraints which the system should take into account when calculating the storage positions of the containers 101, 102, 103.

Further, the control unit 105 is connected to a wireless data transmission unit 107 which can communicate with a wireless user device 108, which the user may also use for inputting information or for receiving information from the system.

The control unit is capable of executing the above-described program element, thereby instructing the fright container storage system 100 to perform the above-described tasks.

The input units 106, 108 may be used to collect user requirements, in particular wishes or targets with relation to container storage. The collection of these requirements can be used for a pre-calculation and the input unit 106 can then provide a first review of the outcome of the pre-calculation. In case of conflicting or inharmonious (user) requirements, a revision of the requirement collection may be performed.

The pre-calculation is creating a first proposal of all relevant relationships between storage containers and storage positions. These relationships can be seen as links and a link may have additional properties, such as cost, time, weight, etc.

Furthermore, also positions and fright containers will have such properties.

A description logics-based tool will now pick up all requirements and quantify the size of the solution set by solution enumeration. If there are too many valid solutions, the requirements contained in the collection can be prioritized. If there are not enough requirements to ensure an enumeration of potential solutions, several quality requirements can be added.

With this method the final and best optimized feasible solution or solutions will be produced. The result will be produced as one formula, reflecting all storage positions.

In each step the whole process may be controlled by relevant key performance indicators (KPIs). A KPI may be a distance of fright containers to some other element or the time to perform a dedicated task, for example container unloading or container loading, optimised handling regarding weight, availability according dedicated timeframes, pick up positions regarding traffic and incoming trucks, pricing regarding urgent goods, internal work load, internal cost as e.g. for staff, contractual agreements, energy management and energy cost according the related daytime.

Fig. 2 shows a flow-chart of a method according to an exemplary embodiment of the present invention. In step 201, a user inputs a desired storage position of a first fright container in a storage space for the container into an input unit of a fright container storage system. In step 202, a pre-calculation of each storage position of each fright container of a plurality of fright containers is performed, taking into account constraints or wishes of the user (which also be input the input unit). Then, in step 203 it is determined whether the pre-calculation reached an acceptable result, i.e., whether the container storage positions have been pre-calculated to observe the set of rules linked to the plurality of the containers.

If the pre-calculation comes to the conclusion that the calculated positions are not all acceptable, the method may start over with step 201, in which the user is invited to input a different position and/or other wishes/constraints.

If it is decided in step 203 that the pre-calculation came to an acceptable result, the method continues with step 204, in which the storage position of the first fright container is varied and/or in which the first fright container is replaced by another fright container of the plurality of fright containers. After that the storage position of each fright container of the plurality of fright containers is determined in accordance with the set of rules.

In step 206, an optimization of the storage positions ("fine-tuning") may be performed, thus resulting in optimized storage positions.

Each or at least some container storage positions may be optimized with respect to optimised handling regarding weight, container availability according to dedicated timeframes, pick up positions regarding traffic and incoming trucks, pricing regarding urgent goods, internal work load, internal cost e.g. for staff, contractual agreements, energy management and energy cost according the related daytime.

In case the user did not define enough rules to be observed, such that the system is not able to determine the storage positions of the containers within a predetermined time scale, the system may be capable of automatically defining further rules, which have to be observed. These further rules may be deterministic or non-deterministic rules, i.e., rules which cannot be varied or rules which can be varied in order to optimize the result. Alternatively or additionally, the system may be adapted to prioritize the rules to be observed, wherein a rule which is of low priority may be disregarded, if observing one or more of the low priority rules would result in container storage positions which contravene a higher priority rule.

Fig. 3 shows two elements 101, 102, for example fright containers. Each element 101, 102 is linked with a set of rules 302, 303, 304, 305 and 306, 307, 308, 309, respectively.

As can be seen from rules 302, 306, the elements 101 and 102 may be placed next to each other, by reducing the distance between the two elements 101, 102. In this particular case, the features of the elements which is to be calculated by the system is the position of the elements. Also, element 102 may be placed on top of element 101, because rules 305 and 309 correspond to each other and allow such a placement. However, element 101 may not be placed on element 102, because rules 303 and 308 do not correspond to each other (they do not "fit").

Same is true with rules 304 and 307, thus not allowing to exchange the two elements and reducing their distance until they touch each other.

The configuration system defines a set of such rules for each element of a plurality of elements and varies a feature of an element of the plurality of elements, for example its position and/or replaces one element by another element. It then calculates the features (for example the positions) of each element of the plurality of elements in accordance with the set of rules.

Fig. 4 shows how non-deterministic rules (rule 306) can be altered or changed, for example into rule 401, thus allowing to rotate element 102 by 180°, exchanging the two elements 101, 102 and moving them closer together.

By varying/exchanging non-deterministic rules and varying/changing features of certain elements an optimized configuration of all elements may be achieved.

One embodiment of the configuration system according to an aspect of the invention is a fright container storage system which calculates the storage positions of the fright containers.

For example, the system may be adapted to place the fright containers according to the trim of the ship and the destinations of dedicated containers.

Furthermore some of the containers may have a need of chilling supply and shall be located in dedicated areas as e.g. the rear area of a ship or where a supply is.

The configuration system may, alternatively or additionally, be adapted to be operated in a warehouse with high rack storage areas or in post offices or at a parcel service store house.

The system may also be adapted as a booking system to distribute hotel guests or passengers in an aircraft or on ferries or cruise ships according to boarding and deboarding times, selected class attributes like family or business areas, etc.

The configuration system may also be adapted as a configuration system for producing functional diagrams, which create a link of data, bounding or power supply between electrical equipment and sockets and/or distributions.

It may also be adapted to calculate optimized cable routings or to define house or building circuitry, comprising electrical systems and mechanical systems (wastewater, fresh water, air-conditioning, etc.).

It may also be used for controlling traffic tasks, such as the planning of traffic systems, thereby considering railways, pedestrians, car drivers, trucks, aircraft traffics, etc.

It should be noted that the term "comprising" does not rule out a plurality. Let it further be noted that features described with reference to one of the above exemplary embodiments can also be used in combination with other features of other exemplary embodiments described above. Moreover, while at least one exemplary embodiment has been presented in the foregoing summary and detailed description, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing an exemplary embodiment, it being understood that various changes may be made in the function and arrangement of elements described in an exemplary embodiment without departing from the scope as set forth in the appended claims and their legal equivalents.

## Claims

1. A configuration system for calculating a feature of each element of a plurality of elements, the system comprising:
a data base comprising a set of rules for each element of the plurality of elements;
a processing unit for automatically varying a first feature of a first element of the plurality of elements and/or for automatically replacing the first element by another element of the plurality of elements, and for calculating the features of the elements in accordance with the set of rules.

2. Configuration system of claim 1, adapted as a fright container storage system for calculating storage positions of a plurality of freight containers in a storage space,
wherein the data base comprises a set of rules for each one of the plurality of freight containers;
wherein the elements are fright containers;
wherein the features of each element which are calculated are storage positions at which the freight containers are stored in the storage space;
wherein the processing unit is configured for automatically varying a storage position at which a first fright container of the plurality of fright containers is to be stored in the storage space and/or automatically replacing the first fright container by another fright container of the plurality of fright containers, and for calculating the storage positions of the plurality of fright containers in accordance with the set of rules.

3. Configuration system according to claim 2, further comprising:
an input module for inputting customer specific configuration data, the configuration data comprising identification data of the first fright container of the plurality of fright containers and the storage position at which the first fright container is to be stored in the storage space.

4. Configuration system according to one of the preceding claims,
wherein the set of rules is based on description logics for each element.

5. Configuration system according to claim 4,
wherein the processing unit is further configured to perform a final check of the calculated storage positions and/or to perform a geometrical optimization of the storage positions.

6. Configuration system according to one of the preceding claims,
wherein the processing unit is further configured for optimizing the calculated features of each element.

7. Configuration system according to one of claims 2 to 6,
wherein the set of rules comprises a sub-set of deterministic rules which do not allow varying the storage position at which a fright container is to be stored in the storage space and automatically replacing the fright container by another fright container of the plurality of fright containers;
wherein the set of rule comprises a sub-set of non-deterministic rules which do allow varying the storage position at which a fright container is to be stored in the storage space and automatically replacing the fright container by another fright container of the plurality of fright containers.

8. Configuration system according to claim 7,
wherein the sub-set of deterministic rules is related to a first group of containers;
wherein the sub-set of non-deterministic rules is related to a second group of containers which is different from the first group.

9. Configuration system according to one of claims 2 to 8,
wherein, if the storage space is the cargo hold of a vessel, a first rule of the set of rules is that the storage position of a fright container which contains a good qualified as a dangerous good is located in a rear area of the vessel; and/or
wherein a second rule of the set of rules is that the storage position of a fright container which contains a good qualified as a dangerous good and/or of a chilled container is located in a region qualified for storing such a container.

10. Configuration system according to one of claims 2 to 9,
wherein the processing unit is further configured to perform a pre-calculation of the storage positions of the plurality of freight containers in the storage space, followed by a check whether the pre-calculated positions are acceptable, before performing a final calculation of the positions in accordance with the set of rules.

11. Configuration system according to one of claims 2 to 10,
wherein the processing unit is further configured to prioritize the rules to be observed, wherein a rule which is of low priority is disregarded, if observing one or more of the low priority rules would result in storage positions which contravene a higher priority rule.

12. Configuration system according to one of the preceding claims, further comprising:
a container transport device for moving each container to its respective storage position.

13. Method for calculating a feature of each element of a plurality of elements, the method comprising:
automatically varying a first feature of a first element of the plurality of elements and/or for automatically replacing the first element by another element of the plurality of elements;
calculating the features of the elements in accordance with the set of rules.

14. Method of claim 13 for calculating storage positions of a plurality of freight containers in a storage space, the method comprising:
automatically varying a storage position at which a first fright container of the plurality of freight containers is to be stored in the storage space and/or automatically replacing the first fright container by another fright container of the plurality of fright containers;
calculating the storage positions of the plurality of fright containers in accordance with a set of rules for each one of the plurality of freight containers.

15. Program element, which, when being executed by a processor of a configuration system, instructs the processor to carry out the steps of the method of claim 13 or 14.

16. Computer-readable medium, comprising a program element of claim 14.
